(19) Europäisches Patentamt
European Patent Office
Office européen des brevets

(11) Veröffentlichungsnummer: **0 474 895 A1**

# (12) EUROPÄISCHE PATENTANMELDUNG

(21) Anmeldenummer: **90117377.3**

(51) Int. Cl.$^5$: **C02F 3/28**

(22) Anmeldetag: **10.09.90**

(43) Veröffentlichungstag der Anmeldung:
**18.03.92 Patentblatt 92/12**

(84) Benannte Vertragsstaaten:
**AT BE CH DE DK ES FR GB GR IT LI LU NL SE**

(71) Anmelder: **WABAG WASSERTECHNISCHE ANLAGEN GmbH & CO. KG**
**Lichtenfelser Strasse 53, Postfach 20 49**
**W-8640 Kulmbach(DE)**

(72) Erfinder: **Valkanas, Georgeos, Prof., Nat. Techn. University**
**of Athens, 9, Heroon Polytechniou Strasse**
**Zografou Campus, GR-157 73 Athens(GR)**
Erfinder: **Vlysidis, Apostolos, Dr., Nat. Techn. University**
**of Athens, 9, Heroon Polytechniou Strasse**
**Zografou Campus, GR-157 73 Athens(GR)**

(74) Vertreter: **Planker, Karl-Josef, Dipl.-Phys.**
**c/o Deutsche Babcock Anlagen AG**
**Parkstrasse 29 Postfach 4 + 6**
**W-4150 Krefeld 11(DE)**

## (54) Verfahren zur anaeroben Behandlung von Abwasser.

(57) Organisch hoch belastetes Abwasser wird in einem Bioreaktor (1) bei einem pH-Wert von etwa 7 gehalten. Aus dem Bioreaktor (1) werden intermittierend relativ kleine Flüssigkeitsmengen entnommen und in einen Reaktor (2) überführt. Dort wird durch Zusatz von Kalkmilch ein pH-Wert von mindestens 9 eingestellt und eine Klärung durch Sedimentation herbeigeführt. Der in dem Reaktor (2) anfallende Schlamm wird in den Bioreaktor (1) zurückgeführt. Die Klarphase wird als vorgereinigtes Abwasser aus dem Reaktor (2) abgezogen. Überschußschlamm wird aus dem Bioreaktor (1) entnommen. Das Verfahren erfordert nur relativ geringen apparativen Aufwand und zeichnet sich durch Prozeßstabilität, gute Biogasausbeute und sehr hohen Methananteil im Biogas aus.

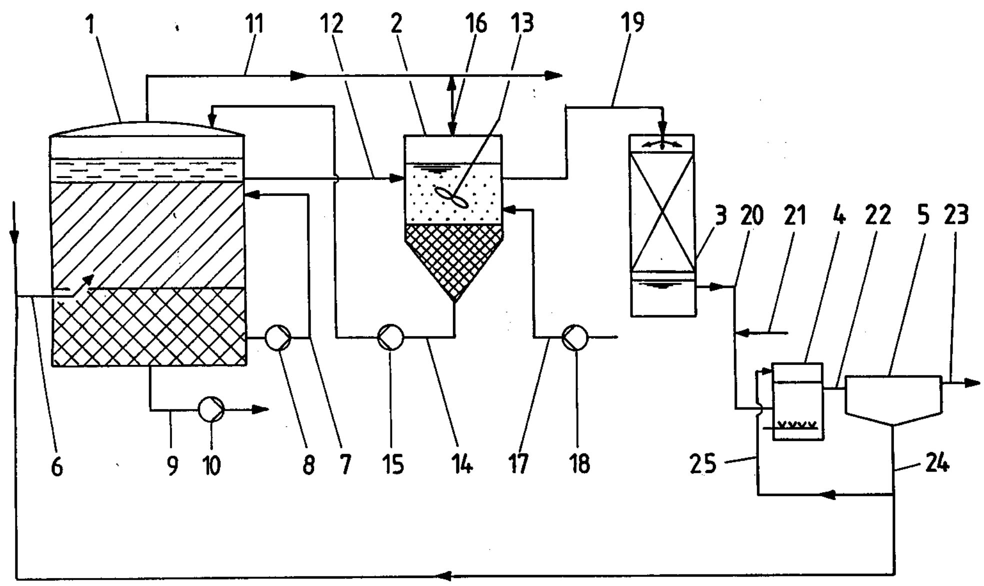


EP 0 474 895 A1

Die Erfindung betrifft ein Verfahren zur anaeroben Behandlung von Abwasser gemäß dem einleitenden Teil des Patentanspruchs 1.

Der anaerobe Abbau von organischer Substanz wird im allgemeinen dann gewählt, wenn die Konzentration des abzubauenden Substrates ein Grenzmaß überschreitet, welches durch den energetischen Aufwand des zur aeroben Veratmung notwendigen Sauerstoffs bestimmt wird. Je nach der Art des Substrates liegt diese Grenze bei 2.000 - 5.000 mg/l, gemessen als chemischer Sauerstoffbedarf (CSB). Hoch belastete Abwässer, bei denen diese Grenze überschritten wird, fallen bei industriellen Erzeugungsprozessen (Nahrungsmittel-, Zellstoff-, Papier-, Brennereibetriebe), aber auch in der Landwirtschaft an (Gülle).

In der Vergangenheit fand die Theorie des zweistufigen anaeroben Abbaus weitgehend Anerkennung. Nach dieser Theorie werden in der ersten Stufe hochmolekulare Verbindungen (Eiweiß, Fette, Kohlehydrate) durch fakultativ anaerobe Bakterien in niederkettige Fettsäuren und Alkohole gespalten. In der zweiten Stufe setzen Methanbakterien diese Zwischenprodukte in Methan und Kohlendioxid um. Von diesen theoretischen Überlegungen leiten sich noch heute zweistufige Anlagenkonzepte ab, welche diese beiden Abbaumechanismen getrennt zu optimieren trachten. Der Erfolg dieser Maßnahme stellt sich jedoch nur bei speziellen Substraten ein.

Nach heutiger wissenschaftlicher Erkenntnis läuft der anaerobe Abbau komplexer ab, und zwar in vier Phasen: Die erste Phase ist die Hydrolysephase, in der die hochmolekularen Substanzen durch Enzyme in gelöste Bruchstücke überführt werden. In der anschließenden Versäuerungsphase werden von verschiedenen anaeroben Bakterienarten kurzkettige organische Säuren (z.B. Butter-, Propion-, Essigsäure), Alkohole, Wasserstoff und Kohlendioxid gebildet. In der acetogenen Phase werden organische Säuren und Alkohole zu Essigsäure abgebaut, wobei die acetogenen Bakterien aus reaktionskinetischen Gründen eng mit den Methanbakterien zusammenarbeiten müssen. Schließlich wird in der methanogenen Phase hauptsächlich aus Essigsäure, Wasserstoff, Bikarbonat und Kohlendioxid das Methan gebildet.

Bei leicht abbaubaren Stoffen laufen Hydrolyse, Versäuerung und Methanbildung in der Regel ohne nennenswerte Schwierigkeiten ab. Die acetogene Phase ist der geschwindigkeitslimitierende Schritt. Bei biologisch schwerer abbaubaren Stoffen kann die Hydrolyse ebenfalls limitierend wirken.

Die optimalen Verfahrensbedingungen der einzelnen Abbauphasen sind verschieden. Versäuernde Bakterien arbeiten bei jedem Temperaturniveau; Methanbakterien reagieren dagegen auf Temperaturänderungen wesentlich empfindlicher. Sie sind in drei Temperaturbereichen anzutreffen, dem kryophilen bei etwa 18 °C, dem mesophilen bei etwa 35 °C und dem thermophilen bei 55 °C. Versäuernde Bakterien arbeiten bei niedrigem pH-Wert besser als Methanbakterien. Widersprüchliche Forderungen ergeben sich zum Teil für die Durchmischung. Die Symbiose zwischen acetogenen und methanogen Bakterien sollte nicht durch hohe Turbulenz gestört werden. Dagegen erfordern Stoffwechselprozesse eine höhere Turbulenz zwecks Kontaktförderung zwischen Substrat und Organismen. Hydrolysierende und versäuernde Bakterien bilden bei wechselndem $H_2$-Partialdruck unterschiedliche Produkte, werden bei hohem Partialdruck jedoch nicht gehemmt. Acetogene Bakterien können nur bei niedrigem $H_2$-Partialdruck existieren. Methanbakterien benötigen $H_2$ als Elektronendonator.

Die bekannten Reaktoren zur Durchführung anaerober Abbauprozesse lassen sich in die folgenden vier Kategorien einordnen: voll durchmischte Reaktoren - Schwebebettreaktoren - Festbettreaktoren - Wirbelbettreaktoren. Durchmischte Reaktoren benötigen als ein- oder zweistufige Anlage zwecks Zurückhaltung der langsam wachsenden Anaerobier immer eine effektive Nachklärstufe. Flotation durch Nachgasen macht große Sedimentationsflächen oder teure Ausgas- oder Kühlvorrichtungen erforderlich. Schwebebettreaktoren haben in der Regel teure Zusatzeinbauten in Form von Parallelplatten oder dergleichen, um erhöhte Biomasseverluste zu vermeiden. Bei starker Gasbildung oder kleinen Biomasseflocken kann es trotzdem zu unerwünschten Störungen durch übermaßigen Biomasseaustrag kommen. Festbettreaktoren können nur Abwässer mit kleinen Feststoffanteilen verarbeiten, da sie verstopfungsanfällig sind. Dies gilt insbesondere für sulfathaltige oder hoch gepufferte Abwässer (Gips- und Kalkausscheidungen). Darüber hinaus setzt die bei Festbettreaktoren mögliche hohe Raumbelastung infolge der gesteigerten Abbaukinetik der acetogenen und methanogenen Stufe in der Regel eine zusätzliche Versäuerungsvorstufe voraus. Diese und die teuren Besiedelungseinbauten machen den wirtschaftlichen Vorteil kurzer Verweilzeiten oft wieder zunichte. Wirbelbettreaktoren haben ebenfalls teure Einbauten aus Sinterglas oder dergleichen, wobei Vorversäuerungs- und Nachkläreinrichtungen wiederum wirtschaftlich negativ zu Buche schlagen. Darüber hinaus sind zur Aufrechterhaltung der Wirbelschicht Umwälzvorrichtungen erforderlich, die erhöhte Energiekosten verursachen.

Bei den meisten aus der Praxis bekannten anaeroben Behandlungsanlagen läuft der Abbauprozeß im kryophilen (10 - 25 °C) oder im mesophilen Bereich (30 - 38 °C) ab. Die thermophile Prozeßführung wurde bisher vereinzelt bei kommunalem Klärschlamm und auch bei Substraten angewendet, die schon mit erhöhten Temperaturen anfallen, z.B. die Abwässer von Brennereien. Obwohl sie schnelleren Stoffumsatz

bei höherem Methananteil im Biogas verspricht, konnte sie sich noch nicht duchsetzen, da Betriebsstörungen aufgrund wechselnder Substratzusammensetzung, schwankender Durchsatzmengen und Betriebspausen selbst mit beträchtlichem Regelaufwand nicht zu vermeiden waren.

Ein wesentliches Kriterium für die Beurteilung eines anaeroben Abbauverfahrens ist die Biogasmenge. Sie liegt bei bekannten Verfahren meistens zwischen 0,3 und 0,55 $Nm^3/kg$ CSB. Ein Maß für die Qualität des Biogases ist sein Methangehalt. Die bekannten Verfahren bringen es der Regel auf 50 - 80 %; der Rest besteht im wesentlichen aus Kohlendioxid. Die Qualität des Biogases kann in erheblichem Maß durch toxische oder korrosive Beimischungen beeinflußt werden, insbesondere durch Schwefelwasserstoff.

Ein quantitativer Leistungsvergleich der einzelnen auf dem Markt befindlichen Verfahren ist beim heutigen Stand der Technik nur mit großen Einschränkungen möglich. Die Leistungsfähigkeit eines Verfahrens hängt in erster Linie von dem zu behandelnden Abwasser ab, d.h. von der Art und Konzentration der organischen Inhaltsstoffe. Ein Vergleich würde daher voraussetzen, daß für die verschiedenen Verfahren Daten über die Behandlung gleichartiger Abwässer vorliegen. Das ist aber nicht der Fall. Etliche Verfahren sind nur für ganz bestimmte Abwässer entwickelt und erprobt worden; sie sind nicht ohne weiteres für Abwässer anderer Zusammensetzung anwendbar, und ihre Ergebnisse sind nicht mit den Ergebnissen anderer Verfahren vergleichbar. Einige Verfahren eignen sich nur für bestimmte Konzentrationsbereiche. In anderen Fällen hat man eine bestimmte Kenngröße zu Lasten anderer Eigenschaften optimiert; eine Verkürzung der Verweilzeit kann z.B. eine Verschlechterung der Prozeßstabilität bedingen.

Die DE-A-3 327 032, von der der einleitende Teil des Patentanspruchs 1 ausgeht, beschreibt ein anaerobes Reinigungsverfahren, das insbesondere für kalziumhaltiges Abwasser, z.B. das Abwasser der Zitronensäureherstellung, anwendbar ist. Dabei wird das Abwasser zuvor einer Versäuerung unterzogen und anschließend in den Bioreaktor überführt. Ein weiterer Reaktor ist als dreistufiger Schlammabscheider ausgebildet. Der hier anfallende Schlamm wird teils in den Bioreaktor zurückgeführt, teils abgezogen. Die in diesem Reaktor anfallende Klarphase wird als vorgereinigtes Abwasser weiteren Reinigungsprozessen zugeführt.

Der Erfindung liegt die Aufgabe zugrunde, ein Verfahren der angegebenen Gattung zu schaffen, das bei geringem apparativem und regelungstechnischem Aufwand eine große Ausbeute an hochwertigem Biogas gewährleistet, sich durch große Prozeßstabilität auszeichnet und für Abwässer verschiedener Herkunft, Zusammensetzung und Konzentration anwendbar ist.

Diese Aufgabe wird durch die im kennzeichnenden Teil des Patentanspruchs 1 angegebene Maßnahme gelöst.

Der anaerobe Abbau gemäß den eingangs angegebenen vier Phasen läuft in dem Bioreaktor ab, wobei über das Zwischenprodukt Essigsäure Methan gebildet wird.

(1) $CH_3\,COOH \dashrightarrow CH_4 + CO_2 \quad G_o = -31\ kJ$

Der in der Versäuerungsphase als Spaltprodukt gebildete Wasserstoff reagiert mit dem reichlich vorhandenen Bikarbonat ebenfalls zu Methan.

(2) $4H_2 + HCO_3 + H^+ \dashrightarrow CH_4 + 3\,H_2O \quad G_o = -135{,}9\ kJ$

Der Vergleich der freien Enthalpie $G_0$ zeigt, daß die Mikroorganismen für die Methanproduktion den Weg gemäß Reaktion (2) bevorzugen. Die Reaktion (2) wird auch durch die in dem Bioreaktor bestehende hohe Bikarbonatkonzentration begünstigt. Diese ist dem Einfluß biologischer Vorgänge zu verdanken. Gelöstes Kohlendioxid, welches aus der biologischen Umsetzung von organisch gebundenem Kohlenstoff entsteht, wird durch die Aktivität von Mirkoorganismen bei hoher Kalziumionenkonzentration in Bikarbonat umgesetzt.

(3) Aktive Zellen $+ CO_2 + H_2O + Ca^{++} \dashrightarrow HCO^-_3 + \ldots$

Dabei bewirken die biologischen Vorgänge eine ausgeprägte Verlagerung des Reaktionsgleichgewichtes in Richtung auf die Bikarbonatproduktion. Die Kohlendioxidkonzentration wird erniedrigt. Dadurch wird auch der Kohlendioxidgehalt des Biogases verringert, d.h. eine bessere Biogasqualität erreicht. Bei hohen Sulfatkonzentrationen im Substrat wird die unerwünschte Bildung von Schwefelwasserstoff durch die hohe Bikarbonatkonzentration zurückgedrängt.

$$(4)\ \text{org. C} + SO_4^{--} + H^+ + 2H_2 \overset{\longleftarrow}{\longrightarrow} H_2S + HCO_3^- + H_2O$$

$$G_O = -160\ kJ$$

Daher ist das Verfahren unempfindlich gegen Sulfate bis 10 g/l. Das erzeugte Biogas ist praktisch frei von Schwefelwasserstoff.

In dem anderen Reaktor entsteht durch die Zugabe des Alkalisierungsmittels für die acetogenen und methanogenen Bakterien eine Streßsituation, welche die Vermehrungsrate in Form resistenter Sporen schlagartig erhöht. Die mit dem Sediment in den Bioreaktor zurückgeführten Mikroorganismen bewirken dort aufgrund guter Lebensbedingungen einen schnellen Anstieg der Population. Gleichzeitig erfolgt eine starke Absorption von Kohlendioxid für den Zellaufbau. Die alkalische Hydrolyse alter Zellsubstanz führt zu einer verringerten Menge Überschußschlamm. Durch die Reaktion

$$(5)\ Ca(OH)_2 + CO_2 \overset{\longrightarrow}{\longleftarrow} CaCO_3 + H_2O$$

gebildetes Kalziumkarbonat wird in die Biomasseflocken eingelagert. Dadurch wird die Aufrechterhaltung eines stabilen Schwebebetts im Bioreaktor gefördert und die Sedimentation des Schlammes verbessert. Der Aufwand für große Sedimentationsbecken kann eingespart werden. Es findet auch eine Fällung von Phosphor statt, so daß dieser den Abwasserstrom nicht mehr belastet. Der hohe pH-Wert bewirkt in dem Reaktor eine Entseuchung des Abwassers.

Die intermittierende Arbeitsweise gemäß Anspruch 2 hat gegenüber einer grundsätzlich ebenfalls möglichen kontinuierlichen Arbeitsweise den Vorteil, daß die Schlammabscheidung in dem Reaktor ohne besondere Vorrichtungen einfach durch Absetzen erfolgen kann.

Anspruch 3 gibt die optimale Menge der jeweils in dem Reaktor zu behandelnden Flüssigkeit an. Bei schwer abbaubaren Inhaltsstoffen, d.h. bei langer mittlerer Verweilzeit im Bioreaktor, liegt die optimale Menge an der unteren Grenze des angegebenen Bereichs, bei leicht abbaubaren Inhaltsstoffen an seiner oberen Grenze.

Die in Anspruch 4 angegebene untere Grenze der Verweilzeit ist bedingt durch die Sedimentation. Die obere Grenze sollte nicht überschritten werden, um eine Schädigung der Bakterien zu vermeiden.

Mit Vorteil soll die Bikarbonatkonzentration innerhalb der Grenzen liegen, die in den Ansprüchen 5 und 6 und insbesondere in Anspruch 7 angegeben sind. Bei hoher Toxizität, d.h. bei hoher Konzentration an Sulfat oder Ammonium, soll die Bikarbonatkonzentration eher im oberen Teil des angegebenen Bereichs liegen.

Der Betrieb im mesophilen bis thermophilen Bereich gemäß Anspruch 8 bewirkt einen beschleunigten Abbau; hieraus folgt eine erhöhte Raumbelastung, so daß ein entsprechend kleinerer und billigerer Bioreaktor eingesetzt werden kann. Bedingt durch die Pufferwirkung, die sich aus der hohen Bikarbonatkonzentration ergibt, hat das erfindungsgemäße Vefahren in dem angegebenen Temperaturbereich auch bei wechselnden Substraten und schwankenden Durchsatzmengen eine gute Stabilität gegen Versäuerung in der Methanstufe. Anders als herkömmliche Verfahren, die bei erhöhten Temperaturen zur Instabilität neigen, können daher aufwendige Regelvorrichtungen entfallen. Die thermophile Prozeßführung ergibt erfahrungsgemäß eine um ca. 50 % kleinere Menge an Überschußschlamm. Im Bioreaktor läßt sich daher leicht ein hohes Schlammalter von mehr als 40 Tagen einstellen. Dies wirkt sich ebenfalls positiv auf die Prozeßstabilität und den regeltechnischen Aufwand aus, ferner auf die Entwässerbarkeit und den Trockensubstanzgehalt des Überschußschlammes, der 25 % übersteigen kann. Der Schlamm bleibt jedoch pumpfähig, wobei nach Abkühlung auf Umgebungstemperatur ein deponiefähiges Produkt entstehen kann, das größtenteils anaerob stabilisiert ist. Die thermophile Betriebsweise empfiehlt sich insbesondere für Abwässer, die mit erhöhter Temperatur anfallen, weil in diesem Falle eine Aufheizung nicht erforderlich ist.

Das Temperaturgefälle gemäß Anspruch 9 hat den positiven Effekt, daß die verschiedenen Bakterienstämme der einzelnen Abbauphasen je ihre optimale Temperatur vorfinden. Es wird eingestellt, indem man vorgewärmtes Substrat mit Abstand über dem Boden des Bioreaktors zuführt und/oder Wärmetauscher bevorzugt im oberen Teil des Bioreaktors anordnet.

Die Temperaturschichtung wird gemäß Anspruch 10 dadurch begünstigt, daß man im Bioreaktor auf eine Zwangsumwälzung, z.B. durch Umrühren oder Umpumpen, verzichtet. Der Reaktorinhalt wird daher lediglich durch aufsteigende Gasblasen, thermischen Auftrieb sowie durch Zu- und Abfluß in schwacher

Bewegung gehalten. In diesem Zustand bildet sich im unteren Teil des Bioreaktors ein nahezu ruhendes, vorwiegend aus inaktiver Materie bestehendes Schlammbett mit geringer Biogasproduktion aus. Die darüber liegende Schicht wird insbesondere durch aufsteigende Gasblasen, deren Anzahl mit zunehmender Höhe stark anwächst, in den Zustand eines Schwebebetts versetzt. Die turbulenzarme Prozeßführung stabilisiert die Flockungsbedingungen und fördert die wichtige Symbiose der acetogenen und methanogenen Bakterien und die Kohlendioxidabsorption durch Mikroorganismen. Andererseits ist die Turbulenz des Schwebebetts ausreichend groß, um vorzeitiges Absetzen zu verhindern.

Für die Nachbehandlung des vorgereinigten Abwassers gemäß Anspruch 11 ist es vorteilhaft, daß das vorgereinigte Abwasser schon mit einem für das Strippen optimalen pH-Wert aus dem Reaktor austritt.

Die Trockensubstanz des aus dem Bioreaktor abgezogenen Überschußschlamms besteht zu etwa 75 % aus Biomasse und zu etwa 25 % aus Kalk. Soll der Überschußschlamm einer anschließenden Entwässerung zugeführt werden, kann gemäß Anspruch 12 der übliche Zusatz von Kalk oder sonstigen Additiven entfallen.

Der Überschußschlamm läßt sich, bedingt durch den hohen Kalkgehalt, gemäß Anspruch 13 sehr gut kompostieren und ergibt einen hochwertigen umweltverträglichen Dünger mit bodenverbessernden Eigenschaften.

Im Gegensatz zu herkömmlichen anaeroben Verfahren, die zumeist mit schwacher, langsam ansteigender Belastung angefahren werden, erfolgt gemäß Anspruch 14 die Inbetriebnahme mit unverdünntem Substrat. Das ist dadurch möglich, daß die hohe Bikarbonatkonzentration gemäß Reaktion (2) den Partialdruck des freien Wasserstoffs erniedrigt, der bei vergleichbaren Verfahren in hohen, den bakteriellen Abbau beeinträchtigenden Konzentrationen vorhanden ist.

Die Zeichnung dient zur Erläuterung der Erfindung anhand einer schematisch dargestellten Behandlungsanlage für hochbelastetes Abwasser.

Die Behandlungsanlage besteht aus einer anaeroben Reinigungsanlage und einer Nachreinigungsanlage. Die anaerobe Reinigungsanlage umfaßt einen Bioreaktor 1 und einen weiteren Reaktor 2. Die Nachreinigungsanlage umfaßt eine Strippkolonne 3, ein Belüftungsbecken 4 und ein Absetzbecken 5.

Der mindestens 3,5 m, vorzugsweise 5 m hohe Bioreaktor 1 ist als geschlossenes zylindrisches Gefäß ausgebildet. Er ist - je nach Art des zu behandelnden Substrates - für eine mittlere Verweilzeit von etwa 3 bis 10 Tagen ausgelegt. Seine Wandungen sind mit einer wärmedämmenden Schicht versehen. Bei etwa 1/3 der Gesamthöhe ist ein nicht dargestelltes, mit einer Zuleitung 6 verbundenes gitterartiges System von Verteilerrohren angeordnet, dessen Düsen schräg aufwärts gerichtet sind. Im übrigen ist der Bioreaktor 1 von Einbauten frei. Eine Umwälzleitung 7 mit Pumpe 8 geht von dem unteren Teil des Bioreaktors 1 aus und mündet in seinen oberen Teil. Am Boden des Bioreaktors ist eine Abzugleitung 9 mit Pumpe 10 für den anfallenden Überschußschlamm angeschlossen. Von dem Deckel des Bioreaktors 1 geht eine Biogasleitung 11 aus.

Eine Verbindungsleitung 12 liegt zwischen dem oberen Teil des Bioreaktors 1 und dem oberen Teil des Reaktors 2, dessen Volumen zum Volumen des Bioreaktors 1 in einem Verhältnis zwischen 1:30 bis 1:200 steht. Der Reaktor 2 ist mit einem Rührer 13 ausgestattet. Von seinem trichterförmig ausgebildeten Boden geht eine Rückführleitung 14 mit Pumpe 15 aus, die in den oberen Teil des Bioreaktors 1 mündet. Der Reaktor 2 ist durch eine Leitung 16 mit der Biogasleitung 11 verbunden. Eine Zuleitung 17 mit Pumpe 18 mündet etwa in halber Höhe in den Reaktor 2.

Von dem oberen Teil des Reaktors 2 ist eine Leitung 19 zu der Strippkolonne geführt. Der Sumpf der Strippkolonne 3 ist durch eine Leitung 20, in die eine Frischwasserleitung 21 einmündet, mit dem Belüftungsbecken 4 verbunden. Von dort ist eine Leitung 22 zum Absetzbecken 5 geführt. Dieses hat im oberen Bereich einen Überlauf 23 und am Boden einen Schlammabfluß 24, der zu der Zuleitung 6 des Bioreaktors 1 zurückgeführt ist. Eine Leitung 25, die von dem Schlammabfluß 24 abgezweigt ist, mündet in das Belüftungsbecken 4.

Die Anlage arbeitet folgendermaßen:

Das zu reinigende Abwasser wird mit einer Temperatur von z.B. etwa 60 °C, ggf. nach vorheriger Erwärmung z.B. unter Einsatz von Biogas als Brennstoff, gleichmäßig über den Querschnitt verteilt in den Bioreaktor 1 eingeleitet und dort unter Luftabschluß gehalten. In dem Bioreaktor 1 läuft der anaerobe Abbauprozeß ab. Der Inhalt des Bioreaktors 1 wird nur in der Anfahrphase und ggf. nach Betriebsstillständen mittels der Pumpe 8 umgewälzt. Im stationären Betrieb wird eine Zwangsumwälzung vermieden. Der pH-Wert der Flüssigkeit liegt zwischen 6 und 8. Die Temperatur beträgt im Mittel z.B. etwa 55 °C, wobei sich durch eine natürliche Temperaturschichtung und ggf. durch nicht dargestellte, im oberen Teil des Bioreaktors angeordnete Wärmeaustauscher zwischen dem oberen und dem unteren Teil eine Temperaturdifferenz bis zu 30 °C einstellt. Vom Boden des Bioreaktors 1 wird in regelmäßigen Abständen - z.B. einmal täglich - mittels der Pumpe 10 Überschußschlamm mit einem Feststoffanteil von bis 35 % entnommen. Auf diese Weise wird im stationären Betrieb eine annähernd konstante Schlammbetthöhe von

mindestens 1,2 m, vorzugsweise 1,7 m, aufrechterhalten. Darüber ist der Reaktorinhalt im Zustand eines Schwebebettes von etwa 2 - 3 m, vorzugsweise etwa 2,5 m Höhe. Über dem Schwebebett befindet sich die Klarphase, deren Schichthöhe etwa 0,3 m beträgt. Der verbleibende, etwa 0,5 m hohe Raum ist von Biogas erfüllt.

Aus der Klarphase wird intermittierend über die Leitung 12 Flüssigkeit entnommen und dem Reaktor 2 zugeführt. Die Entnahmemenge entspricht jeweils nahezu dem Fassungsvermögen des Reaktors 2. Die zeitlichen Abstände sind so bemessen, daß der Flüssigkeitspegel im Bioreaktor 1 im wesentlichen konstant bleibt, d.h. die entnommene Flüssigkeitsmenge entspricht im zeitlichen Mittel der zufließenden Abwassermenge. Wenn der Reaktor 2 annähernd gefüllt ist, wird über die Leitung 17 Kalkmilch zugegeben, bis im Reaktor 2 ein pH-Wert von mindestens 9, vorzugsweise mindestens 10,7, erreicht ist. Mit dem Rührwerk 13 wird die Masse homogenisiert. Danach wird der Rührer 13 abgeschaltet, und man wartet die Klärung ab. Nach einer etwa 2,5 Stunden dauernden Sedimentation wird der mit Kalk versetzte Schlamm abgezogen und vollständig über die Leitung 14 in den Bioreaktor 1 zurückgeführt. Dem Bioreaktor 1 werden von Zeit zu Zeit Proben entnommen, an denen der Bikarbonatgehalt gemessen wird. Dementsprechend wird die zugeführte Kalkmilch dosiert, so daß im Bioreaktor stets die optimale Bikarbonatkonzentration aufrechterhalten wird. Zusätzlich kann auch der $CO_2$-Gehalt des Biogases gemessen werden. Wenn er deutlich über einen Minimalwert ansteigt, der für jedes Substrat durch Versuche zu ermitteln ist, wird die Kalkmilchzugabe erhöht.

Biogas wird sowohl aus dem Bioreaktor 1 als auch aus dem Reaktor 2 abgeführt, und zwar über die Leitungen 11, 16.

Die im Reaktor 2 verbleibende Klarphase enthält noch etwa 20 - 25 % der Feststoffmenge, die ursprünglich in der aus dem Bioreaktor 1 zugeführten Flüssigkeitscharge enthalten war. Sie wird über die Leitung 19 in die Strippkolonne 3 eingeleitet, die in üblicher Weise mit Füllkörpermaterial beispielsweise in Form von Keramikkörpern oder Plastikfolien bestückt ist. Mit Hilfe eines Luftstroms wird das in der Flüssigkeit enthaltene Ammoniak - ggf. zusammen mit anderen flüchtigen Inhaltsstoffen - ausgetrieben.

Das ausgetriebene Gas wird z.B. in einem nicht dargestellten Biogasbrenner verbrannt.

Aus dem Sumpf der Strippkolonne 3 wird die Flüssigkeit in das Belüftungsbecken 4 zur aeroben Reinigung eingeleitet. Falls die organische Fracht noch zu hoch ist, wird über die Leitung 21 Reinwasser beigemischt. Vom Belüftungsbecken 4 wird die Flüssigkeit dem Absetzbecken 5 zugeführt. Durch den Überlauf 23 wird gereinigtes Abwasser entnommen, das je nach Bedarf teilweise über die Leitung 21 als Reinwasser zurückgeführt wird. Der aus dem Absetzbecken 5 abgezogene Schlamm wird teilweise in den Bioreaktor 1, teilweise in das Belüftungsbecken 4 zurückgeführt.

Mit einer Pilotanlage, deren Bioreaktor 1 ein Volumen von 10 $m^3$ und deren Reaktor 2 ein Volumen von 0,25 $m^3$ hatte, wurde das Verfahren gemäß der Erfindung an verschiedenen Substraten erprobt. Näheres ist den folgenden Beispielen zu entnehmen:

<u>Beispiele:</u>

1. Die Pilotanlage wurde mit Abfällen aus einer Brennerei (fermentative Vergärung von Zuckerrüben-Abfällen) beschickt mit folgender Zusammensetzung:

| | |
|---|---|
| - $BSB_5$ | 31.200 mg/l |
| - CSB | 95.000 mg/l |
| - Schwebestoffe ca. | 9 % |
| - Sulfate | 4.500 mg/l |

In der Einarbeitungsphase von 2 - 3 Wochen wurden organische Säuren von ca. 8.000 mg/l gemessen, wobei das sich bildende Biogas vorwiegend aus Wasserstoff, Pentan, Butan und Äthanol bestand; mit sinkendem pH-Wert stieg der Methananteil im Biogas an, im Neutralbereich war der Anteil an org. Säuren mit ca. 4.000 mg/l noch sehr hoch.

Nach weiteren 2 Wochen war der Methananteil im Biogas auf ca. 90 % angestiegen und der Anteil der org. Säuren auf ca. 2.000 mg/l abgesunken. Die Bikarbonatkonzentration betrug schließlich bei stabilen Betriebsverhältnissen ca. 150.000 mg/l, die Temperatur im oberen Reaktorbereich 56 °C, die Raumbelastung ca. 5 kg CSB/$m^3$.d bei einer Verweilzeit im Bioreaktor 1 von ca. 6 Tagen.

Folgende Ergebnisse wurden erreicht:

vorgereinigtes Abwasser: $BSB_5$ < 4.500 mg/l
CSB < 9.000 mg/l

| | |
|---|---|
| Biogas: | Menge 0,57 $Nm^3$/kg org. Feststoff |
| | Methananteil ca. 90 % |
| | $H_2S$-Anteil < 700 ppm |

2. Die Pilotanlage wurde zum Abbau von Schweinegülle folgender Zusammensetzung eingesetzt:

- $BSB_5$ 2.500 mg/l
- CSB 65.000 mg/l
- Feststoffgehalt 9,2 %

Nach 25 Tagen war die Assimilation der biologischen Kultur abgeschlossen. Anschließend begann die Behandlung, und es stellten sich folgende Betriebsdaten im Bioreaktor 1 ein:

- Raumbelastung 10,8 kg CSB/$m^3$.d
- Verweilzeit 6 Tage
- Temperatur im oberen Reaktorbereich 56 °C
- org. flüchtige Säure 1.450 mg/l
- Bikarbonatkonzentrationen 46.000 mg/l

Folgende Ergebnisse wurden erreicht:

| | |
|---|---|
| vorgereinigtes Abwasser: | $BSB_5$ < 1.000 mg/l |
| | CSB < 2.500 mg/l |
| Biogas: | Menge 0,59 $Nm^3$/kg org. Feststoff |
| | Methananteil > 95 % |
| | $H_2S$-Anteil < 400 ppm |

3. Die Pilotanlage wurde zum Abbau von vorsortiertem Stadtmüll folgender Zusammensetzung eingesetzt:

- $BSB_5$ 20.500 mg/l
- CSB 51.000 mg/l
- Schwebestoffe 6,8 %

Die Assimilation der thermophilen anaeroben Kultur an den Abfall war nach 20 Tagen abgeschlossen. Danach begann die Behandlung gemäß der Erfindung. Nach Stabilisierung des Systems stellten sich im Reaktor folgende Betriebsbedingungen ein:

- Raumbelastung 8,5 kg $CSB_r$/$m^3$.d
- Verweilzeit 6 Tage
- pH-Wert 6,8
- organische flüchtige Säuren 1.450 mg/l
- Bikarbonatkonzentration ca. 14.000 mg/l

Folgende Ergebnisse wurden erreicht:

| | |
|---|---|
| vorgereinigtes Abwasser: | Schwebstoffe 300 mg/l |
| Biogas: | Menge 0,42 $Nm^3$/kg org. Feststoff |
| | Methananteil 93 % |
| | $H_2S$-Anteil < 500 ppm |

4. Die Pilotanlage wurde zum Abbau von Abwässern aus der Zellstoffindustrie mit sulfidischem Aufschluß folgender Zusammensetzung eingesetzt:

- $BSB_5$ 18.000 mg/l
- CSB 90.000 mg/l
- Sulfate 6 - 10 g/l
- Schwefeldioxid 10 g/l
- Schwebestoffe 6,5 %

Nach Vorbehandlung durch Luftstrippen bei 60°C kann das $SO_2$ fast vollständig in den Aufschlußprozeß zurückgeführt werden, Sulfite werden zu Sulfaten aufoxidiert. Das so vorbehandelte Abwasser wird entsprechend der Erfindung behandelt, und im Bioreaktor 1 stellt sich schon nach 35 Tagen ein stabiles biologisches Gleichgewicht ein wie folgt:

- Raumbelastung 13,8 kg $CSB_r$/$m^3$.d
- Verweilzeit 6,5 Tage

Folgende Ergebnisse wurden erreicht:

| | |
|---|---|
| vorgereinigtes Abwasser: | $BSB_5$ 1.500 mg/l |
| | CSB 700 mg/l |
| | Schwebstoffe ca. 350 mg/l |
| Biogas: | Menge 0,45 $Nm^3$/kg org. Feststoff |
| | Methananteil 93 % |
| | $H_2S$-Anteil < 700 ppm |

## Patentansprüche

1. Verfahren zur anaeroben Behandlung von Abwasser, das mit organischen Stoffen belastet ist,

   mit folgenden Merkmalen:
   a) Das Abwasser wird einem Bioreaktor (1) zugeführt und darin bei einem pH-Wert von 6 - 8 gehalten;
   b) Aus dem Bioreaktor (1) wird Flüssigkeit entnommen und in einem weiteren Reaktor (2) geklärt;
   c) Aus dem Reaktor (2) wird Schlamm abgezogen und mindestens teilweise in den Bioreaktor (1) zurückgeführt;
   d) Aus dem Bioreaktor (1) wird Überschußschlamm abgeführt;
   e) Aus dem Reaktor (2) wird Klarphase als vorgereinigtes Abwasser abgeführt;
   dadurch gekennzeichnet, daß die Flüssigkeit in dem Reaktor (2) durch Zumischen eines Alkalisierungsmittels, wie Kalziumhydroxid oder Magnesiumhydroxid, auf einen pH-Wert von mindestens 9 eingestellt wird.

2. Verfahren nach Anspruch 1, dadurch gekennzeichnet, daß die Behandlung in dem Reaktor (2) chargenweise erfolgt.

3. Verfahren nach Anspruch 2, dadurch gekennzeichnet, daß die aus dem Bioreaktor (1) entnommene Flüssigkeitsmenge zum Gesamtinhalt des Bioreaktors (1) in einem Verhältnis zwischen 1:30 und 1:200 steht.

4. Verfahren nach einem der Ansprüche 1 bis 3, dadurch gekennzeichnet, daß die Verweilzeit in dem Reaktor (2) 1,5 bis 3,5 h beträgt.

5. Verfahren nach einem der Ansprüche 1 bis 4, dadurch gekennzeichnet, daß die Bikarbonatkonzentration in dem Bioreaktor (1) über 5.000 mg/l gehalten wird.

6. Verfahren nach Anspruch 5, dadurch gekennzeichnet, daß eine Bikarbonatkonzentration bis zu 200.000 mg/l aufrechterhalten wird.

7. Verfahren nach Anspruch 6, dadurch gekennzeichnet, daß eine Bikarbonatkonzentration zwischen 35.000 und 150.000 mg/l aufrechterhalten wird.

8. Verfahren nach einem der Ansprüche 1 bis 7, dadurch gekennzeichnet, daß in dem Bioreaktor (1) eine Temperatur zwischen 35 und 60 °C aufrechterhalten wird.

9. Verfahren nach Anspruch 8, dadurch gekennzeichnet, daß zwischen dem oberen Bereich und dem bodennahen Bereich des Bioreaktors (1) ein Temperaturunterschied von mindestens 15 °C aufrechterhalten wird.

10. Verfahren nach einem der Ansprüche 1 bis 9, dadurch gekennzeichnet, daß der Inhalt des Bioreaktors (1) im stationären Betrieb der natürlichen Umwälzung überlassen bleibt.

11. Verfahren nach einem der Ansprüche 1 bis 10, dadurch gekennzeichnet, daß das aus dem Reaktor (2) abgeführte vorgereinigte Abwasser durch Strippen mit Luft oder Dampf von Ammonium befreit wird.

12. Verfahren nach einem der Ansprüche 1 bis 11, dadurch gekennzeichnet, daß der aus dem Bioreaktor (1) abgeführte Überschußschlamm ohne Hinzufügen eines Additivs mechanisch entwässert wird.

13. Verfahren nach einem der Ansprüche 1 bis 11, dadurch gekennzeichnet, daß der aus dem Bioreaktor (1) abgezogene Überschußschlamm zusammen mit einem organischen Trägermaterial, wie gehäckseltes Stroh oder Sägespäne kompostiert wird.

14. Verfahren nach einem der Ansprüche 1 bis 13, dadurch gekennzeichnet, daß dem Bioreaktor (1) bereits in der Anfahrphase unverdünntes Substrat zugeführt wird.

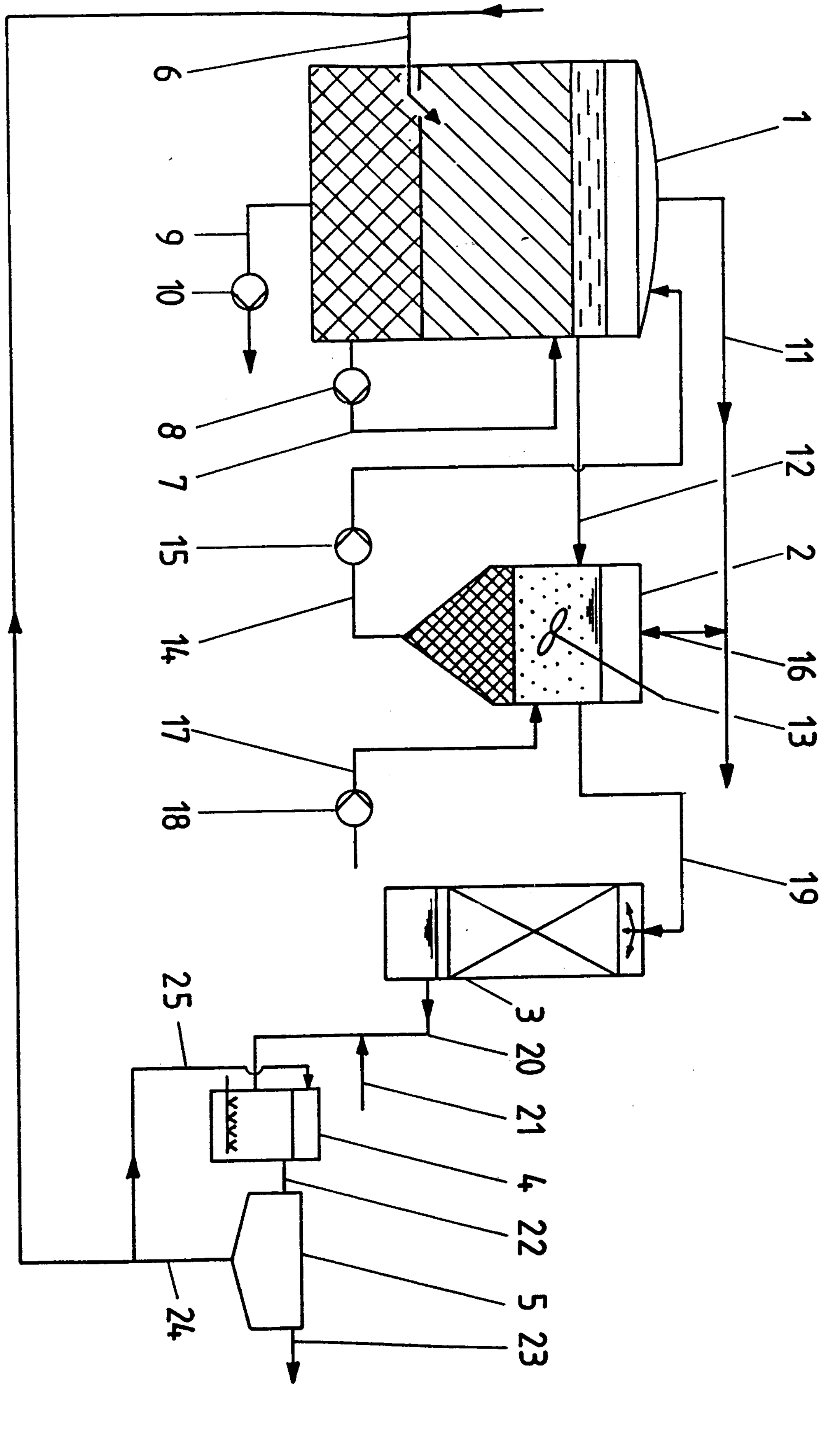
1
2
3
4
5
6
7
8
9
10
11
12
13
14
15
16
17
18
19
20
21
22
23
24
25

Europäisches Patentamt

# EUROPÄISCHER RECHERCHENBERICHT

Nummer der Anmeldung

EP 90 11 7377

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-2 661 332 (SWIFT & CO.)<br>* Spalte 3, Zeile 9 - Spalte 4, Zeile 6 *<br>--- | 1 | C 02 F 3/28 |
| A | GWF AUSGABE WASSER/ABWASSER, Band 126, Nr. 2, Februar 1985, Seiten 56-65, München, DE; A. AIVASIDIS et al.: "Biomasseabtrennung in der anaeroben Abwasserreinigung"<br>* Seite 59, rechte Spalte, vorletzter Absatz; Seite 60, Bild 8b *<br>--- | 1 | |
| A | PATENT ABSTRACTS OF JAPAN, Band 12, Nr. 22 (C-470)[2869], 22. Januar 1988, Seite 155 C 470; & JP-A-62 176 596 (EBARA CORP.) 03-08-1987<br>* Das ganze Dokument *<br>--- | 1 | |
| A | EP-A-0 231 762 (PASSAWANT-WERKE)<br>* Seiten 1-4; Figur 1 *<br>--- | 1 | **RECHERCHIERTE SACHGEBIETE (Int. Cl.5)** |
| A | US-A-3 105 041 (A.L. GENTER et al.)<br>* Spalte 2, Zeile 55 - Spalte 3, Zeile 4; Spalte 7, Zeilen 41-49 *<br>--- | 1,2 | C 02 F |
| A | DE-A-3 327 032 (J.A. BENCKISER)<br>* Ansprüche 1-10 *<br>----- | 1 | |

~~Der vorliegende Recherchenbericht wurde für alle Patentansprüche erstellt~~

| Recherchenort | Abschlußdatum der Recherche | Prüfer |
|---|---|---|
| DEN HAAG | 10-05-1991 | TEPLY J. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)

Europäisches
Patentamt

## GEBÜHRENPFLICHTIGE PATENTANSPRÜCHE

Die vorliegende europäische Patentanmeldung enthielt bei ihrer Einreichung mehr als zehn Patentansprüche.

☐ Alle Anspruchsgebühren wurden innerhalb der vorgeschriebenen Frist entrichtet. Der vorliegende europäische Recherchenbericht wurde für alle Patentansprüche erstellt.

☐ Nur ein Teil der Anspruchsgebühren wurde innerhalb der vorgeschriebenen Frist entrichtet. Der vorliegende europäische Recherchenbericht wurde für die ersten zehn sowie für jene Patentansprüche erstellt für die Anspruchsgebühren entrichtet wurden,

nämlich Patentansprüche:

☐ Keine der Anspruchsgebühren wurde innerhalb der vorgeschriebenen Frist entrichtet. Der vorliegende europäische Recherchenbericht wurde für die ersten zehn Patentansprüche erstellt.

## x MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung; sie enthält mehrere Erfindungen oder Gruppen von Erfindungen, nämlich:

Siehe Blatt -B-

☐ Alle weiteren Recherchengebühren wurden innerhalb der gesetzten Frist entrichtet. Der vorliegende europäische Recherchenbericht wurde für alle Patentansprüche erstellt.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind,

nämlich Patentansprüche:

☒ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen,

nämlich Patentansprüche: 1-10,14

Europäisches
Patentamt

EP 90 11 7377 -B-

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung; sie enthält mehrere Erfindungen oder Gruppen von Erfindungen, nämlich:

1. Patentansprüche 1-10,14.
2. Patentanspruch 11: Strippen des gereinigten Wassers.
3. Patentanspruch 12: Mechanische Entwässerung von Schlamm.
4. Patentanspruch 13: Kompostierung von Schlamm.